# EUROPEAN PATENT APPLICATION

(11) **EP 3 059 282 A1**
(43) Date of publication of application: **24.08.2016**
(21) Application number: 14866084.8
(22) Date of filing: 01.10.2014
(51) Int. Cl.: C08L 67/00, C08L 67/03, C08L 75/04, B29C 41/18

(54) **POWDER SLUSH MOLDING COMPOSITION**

(30) Priority: 29.11.2013 KR 20130147117
(71) Applicant: Fine Chemical Co., Ltd., Gimhae-si, Gyeongsangnam-do 621-801 (KR)
(72) Inventor: LEE, Sung Yull, Busan 607-753 (KR)
(74) Representative: Prüfer & Partner mbB Patentanwälte · Rechtsanwälte
(86) International application number: PCT/KR2014/009259
(87) International publication number: WO 2015/080373

(57) **Abstract**

Provided is a powder slush molding composition including a thermoplastic polyester elastomer (TPEE) having a peak melting point of 130 to 200 °C, as measured by differential scanning calorimetry (DSC). The composition has a Shore A hardness not higher than 95 and a melt index (190 °C, 2.16 kg) of 10 to 100 g/10 min.

## Description

### Technical Field

The present disclosure relates to a powder slush molding composition, and more specifically to a composition that is rapidly melted and solidified, thus being suitable for powder slush molding.

### Background Art

With the advent of mass production and consumption of automobiles in the 1960's, plastics have emerged as structural materials for automobiles. Plastic materials are lightweight compared to metallic materials and are excellent in productivity due to their superior moldability. Plastic materials are good choices for weight reduction and high fuel efficiency of vehicles and their application to automotive parts is steadily on the rise.

Crash pads, also referred to as instrument panels or dashboards, are the most important interior parts of automobiles. A typical crash pad is attached to the lower end of the windshield in front of the driver's seat and essentially consists of a gauge panel in which a cluster of meters, such as a speedometer, a gas gauge, and a water temperature gauge, are integrated, and a housing in which devices, such as an air conditioning system, a radio, a clock, an ashtray, and a console box, are accommodated. Crash pads are considered very important parts in terms of design, convenience, and safety because drivers manipulate and check the meters and devices during driving. Such crash pads should meet requirements, in terms of appearance properties (such as soft touch feeling, exclusivity, and mat finish), comfortability, design, cost effectiveness, and reproducibility and should pass various tests (including cold resistance, heat resistance, light resistance, weather resistance (Xenon/Carbon arc, UV), passenger airbag (PAB) deployment, head impact, durability in multiple environments, outdoor exposure, impact resistance, and other tests).

Powder slush molding (PSM) is a typical process for the production of skins of automotive interior materials. PSM is particularly advantageous in design and embossing properties, thus being suitable for the production of skins of crash pads. This process is carried out in such a manner that a freely flowing polymer in the form of a powder is loaded into an open container, the open container is coupled to a heated mold to form a closed system, the powder is melted on the hot mold by rotating the closed system, to obtain a uniform layer as a product, and the product is demolded from the mold.

U.S. Patent No. 5036124 describes the use of polyvinyl chloride (PVC) in a conventional powder slush molding (PSM) composition, which is mainly used to produce automotive interior materials. However, PVC is toxic to humans and causes environmental problems. As a solution to these problems, Korean Patent No. 10-2012-0019781 proposes the use of thermoplastic polyurethane (TPU) instead of PVC. However, TPU is expensive and is badly discolored when exposed to sunlight. Techniques associated with the use of other materials, such as polypropylene (PP) (U.S. Patent No. 5308699) and ethylene propylene rubber (U.S. Patent No. 5744086), have been proposed. However, these techniques fail to meet requirements in terms of physical properties. There is thus a need for new materials for powder slush molding.

### Detailed Description of the Invention

According to one aspect of the present invention, there is provided a powder slush molding composition which includes a thermoplastic polyester elastomer (TPEE) having a peak melting point of 130 to 200 °C, as measured by differential scanning calorimetry (DSC), wherein the composition has a Shore A hardness not higher than 95 and a melt index (190 °C, 2.16 kg) of 10 to 100 g/10 min.

According to a further aspect of the present invention, there is provided an automobile interior material that is produced by processing the powder slush molding composition.

According to another aspect of the present invention, there is provided a powder slush molding method which includes: feeding the powder slush molding composition in the form of a powder into an open container; heating an electroforming mold; coupling the open container to the electroforming mold to form a closed system; transferring the powder to the electroforming mold by moving the closed system and melting the powder on the inner surface of the electroforming mold to form a material layer; releasing the electroforming mold from the open container; cooling the electroforming mold; and demolding the material layer from the electroforming mold.

### Mode for Carrying out the Invention

The present invention will be described in more detail with reference to the following exemplary embodiments.

One aspect of the present invention provides a powder slush molding composition which includes a thermoplastic polyester elastomer (TPEE) having a peak melting point of 130 to 200 °C, as measured by differential scanning calorimetry (DSC), wherein the composition has a Shore A hardness not higher than 95 and a melt index (190 °C, 2.16 kg) of 10 to 100 g/10 min.

The thermoplastic polyester elastomer refers to an elastomer in which crystalline hard segments formed from an aromatic dicarboxylic acid and an aliphatic or alicyclic diol and flexible soft segments formed from a polyalkylene oxide are arranged randomly.

The aromatic dicarboxylic acid constitutes the polyester moieties of the hard segments. The aromatic dicarboxylic acid is not particularly limited and may be any of those widely used in the art. The aromatic dicarboxylic acid is preferably terephthalic acid or a naphthalene dicarboxylic acid. Other suitable aromatic dicarboxylic acids include diphenyldicarboxylic acids, isophthalic acid, and 5-sodium sulfoisophthalic acid. The aromatic dicarboxylic acid may be used in combination with an additional acid, for example, an alicyclic or aliphatic dicarboxylic acid. The alicyclic dicarboxylic acid may be a cyclohexanedicarboxylic acid or tetrahydrophthalic anhydride. The aliphatic dicarboxylic acid may be succinic acid, glutaric acid, adipic acid, azelaic acid, sebacic acid, dodecanoic diacid, a dimer acid or a hydrogenated dimer acid. The additional acid is used in an amount of less than 30 mol%, preferably less than 20 mol%, based on the total moles of all acid components. Within this range, the melting point of the resin is not significantly lowered.

The aliphatic or alicyclic diol constitutes the polyester moieties of the hard segments. The diol is not particularly limited and may be any of those widely used in the art. The diol is preferably a C₂-C₈ alkylene glycol. Specific example of suitable diols include ethylene glycol, 1,3-propylene glycol, 1,4-butanediol, 1,6-hexanediol, and 1,4-cyclohexanedimethanol. 1,4-Butanediol or 1,4-cyclohexanedimethanol is most preferred.

The polyester moieties of the hard segments consist of butylene terephthalate or butylene naphthalate units, which are preferred in terms of physical properties, moldability, and cost for performance.

Suitable constituent polyester moieties of the hard segments in the thermoplastic polyester elastomer may be aromatic polyester moieties that can be easily obtained by general methods for polyester production. The number average molecular weight of such polyester moieties is preferably from 10000 to 40000.

Aliphatic polycarbonate moieties constitute the soft segments in the thermoplastic polyester elastomer. The aliphatic polycarbonate moieties preferably consist of carbonate bonds and aliphatic diol moieties, mainly C₂-C₁₂ aliphatic diol moieties. These aliphatic diol moieties may be, for example, ethylene glycol, 1,3-propylene glycol, 1,4-butanediol, 1,5-pentanediol, 1,6-hexanediol, 1,8-octanediol, 2,2-dimethyl-1,3-propanediol, 3-methyl-1,5-pentanediol, 2,4-diethyl-1,5-pentanediol, 1,9-nonanediol, and 2-methyl-1,8-octanediol moieties. C₅-C₁₂ aliphatic diol moieties are particularly preferred taking into consideration the flexibility or low-temperature properties of the thermoplastic polyester elastomer. These components may be used alone or in combination of two or more thereof, if desired.

An aliphatic polycarbonate diol may be used to constitute the soft segments in the thermoplastic polyester elastomer. Preferably, the aliphatic polycarbonate diol has a low melting point (*e.g*., ≤ 70 °C) and a low glass transition temperature for good low-temperature properties. Generally, the aliphatic polycarbonate diol consisting of 1,6-hexanediol moieties has a glass transition temperature of around -60 °C and a melting point of around 50 °C. The low glass transition temperature and melting point ensure good low-temperature properties of the aliphatic polycarbonate diol. Alternatively, the aliphatic polycarbonate diol may be obtained by copolymerization with an appropriate amount of 3-methyl-1,5-pentanediol. In this case, the aliphatic polycarbonate diol has a slightly higher glass transition temperature but has a lower melting point or becomes amorphous, ensuring its good low-temperature properties. For example, the aliphatic polycarbonate diol consists of 1,9-nonanediol and 2-methyl-1,8-octanediol has a melting point of about 30 °C and a glass transition temperature of around -70 °C, which are low enough to ensure good low-temperature properties of the aliphatic polycarbonate diol.

The aliphatic polycarbonate diol is not necessarily composed of polycarbonate components only and may be produced by copolymerization with a small amount of another compound, for example, a glycol, dicarboxylic acid, ester or ether compound. Examples of such copolymerizable components include: glycols, such as dimer diols, hydrogenated dimer diols, and modified products thereof; dicarboxylic acids, such as dimer acids and hydrogenated dimer acids; polyesters or oligoesters obtained from an aliphatic, aromatic or alicyclic dicarboxylic acid and a glycol; polyesters or oligoesters obtained from ε-caprolactone; and polyalkylene glycols or oligoalkylene glycols, such as polytetramethylene glycol and polyoxyethylene glycol. The copolymerizable component may be used in such an amount that the effects of the aliphatic polycarbonate segments are not substantially lost. The copolymerizable component is used in an amount of 40 parts by weight or less, preferably 30 parts by weight or less, more preferably 20 parts by weight or less, based on 100 parts by weight of the aliphatic polycarbonate segments. The excess copolymerizable component cause poor heat aging resistance and water resistance of the thermoplastic polyester elastomer.

Another copolymerizable component may be introduced into the soft segments of the thermoplastic polyester elastomer so long as the effects of the present invention are not sacrificed. For example, the copolymerizable component may be a polyalkylene glycol, such as polyethylene glycol or polyoxytetramethylene glycol, or a polyester, such as polycaprolactone or polybutylene adipate, The content of the copolymerizable component is typically 40 parts by weight or less, preferably 30 parts by weight or less, more preferably 20 parts by weight or less, based on 100 parts by weight of the soft segments.

In the thermoplastic polyester elastomer, the constituent polyester moieties of the hard segments and the constituent aliphatic polycarbonate moieties and copolymerizable components of the soft segments are typically used in such amounts that the weight ratio of the hard segments to the soft segments is in the range of 30:70 to 95:5, preferably 40:60 to 90:10, more preferably 45:55 to 87:13, most preferably 50:50 to 85:15.

In one embodiment, the thermoplastic polyester elastomer may have a melt index (MI) of 0.01 to 30 g/10 min, 0.01 to 20 g/10 min, 0.1 to 10 g/10 min, 0.1 to 5.0 g/10 min, 0.1 to 3.0 g/10 min, 0.1 to 1.0 g/10 min, 0.3 to 0.6 g/10 min, or 1 to 30 g/10 min, as measured by ASTM D1238 (190 °C, 2.16 kg).

Specifically, as the thermoplastic polyester elastomer, there may be mentioned, for example, a product available from E. I. DuPont de Nemours & Co. Inc. (Wilmington, Delaware 19898, USA) under the trade name HYTREL, which has poly(1,4-butylene terephthalate) and poly(tetramethylene ether)glycol blocks. As a further example, the thermoplastic polyester elastomer may be one having poly(ethylene terephthalate) and polyalkylene glycol blocks. As another example, the thermoplastic polyester elastomer may be one having poly(1,4-butylene terephthalate) and polyalkylene glycol blocks.

The TPEE is easy to adjust its MI and is easy to micro-pelletize by extrusion compared to other materials. The TPEE has better scratch resistance than other polymers, such as olefin block copolymers (OBCs), thermoplastic polyolefins (TPOs), styrene-ethylene-butylene-styrene (SEBS) copolymers, which require surface coating. Unlike thermoplastic polyurethane (TPU), the TPEE is not discolored when exposed to sunlight. In addition, the TPEE is an environmentally friendly material because it does not suffer from fogging and is less harmful, unlike polyvinyl chloride (PVC).

When an automobile stops in a hot desert, the surface temperature of the crash pad may rise to 120 °C. Due to its high melting point (≥ 130 °C), the TPEE can be used as a material suitable for the production of an automotive interior material.

On the other hand, if a material having too high a melting point is used for powder slush molding, much energy is required to increase the temperature of the mold and a long time is required to cool the mold, resulting in low productivity. Excessive heating may result in poor durability of the mold that undergoes requires repeated heating/cooling cycles during processing. In view of this, the melting point of the TPEE is limited to 200 °C or less.

The TPEE may have a Shore A hardness exceeding 95 depending on its grade. In this case, the hardness of the TPEEs needs to be lowered by blending with a large amount of an additive, such as a plasticizer. However, the use of the additive increases the risk of migration and deteriorates the surface properties of the product. Therefore, it is preferred to adjust the Shore A hardness of the TPEE to 95 or less.

The powder slush molding composition may further include a melt index enhancer to improve its melt index. The melt index enhancer is a compound that is highly compatible with the TPEE and has an extremely low viscosity at a high temperature. The melt index enhancer may a liquid compound highly compatible with the TPEE or may be selected from materials that are highly compatible with the TPEE and have an extremely low viscosity (*e*.*g*., a melt viscosity of tens to hundreds of g/10 min) when heated to 190 to 230 °C, which is a working temperature for PSM. The melt index enhancer is not limited to a specific kind and may be selected from the group consisting of a wax, thermoplastic polyurethane (TPU), toluene ethyl sulfonamide, and mixtures thereof.

The melt index enhancer may be present in an amount of 1 to 20 parts by weight, based on 100 parts by weight of the thermoplastic polyester elastomer (TPEE). The use of the melt index enhancer in an amount of less than 1 part by weight may result in little improvement in melt index. Meanwhile, the use of the melt index enhancer in an amount exceeding 20 parts by weight may deteriorate the inherent physical properties of the TPEE.

The wax may be, for example, a paraffin wax, a microcrystalline wax or a polyethylene wax. The wax may be used in an appropriate amount to reduce the MI of the composition at a relatively low cost without deterioration of other physical properties.

The thermoplastic polyurethane (TPU) refers to a reaction product of a diisocyanate, at least one polymeric diol, and optionally at least one difunctional chain extender. The TPU may be produced by a prepolymer method, a pseudo-prepolymer method or one-shot method. The diisocyanate forms hard segments of the TPU and may be selected from aromatic diisocyanates, aliphatic diisocyanates, alicyclic diisocyanates, and combinations of two or more thereof. The polymeric diol forms soft segments of the TPU. The difunctional chain extender may be an aliphatic straight or branched diol having 2 to 10 carbon atoms in the chain structure. The viscosity of the thermoplastic polyurethane tends to decrease rapidly at high temperature. This tendency is advantageous in increasing the MI of a blend of the TPEE and the TPU. The TPU has better rebound resilience than the TPEE. Therefore, blending with the TPU contributes to an improvement in the elasticity of a final product.

An ethylene copolymer or an olefin random copolymer (ORC) may be mixed to adjust the price of the composition. The ethylene copolymer may be a copolymer of i) ethylene and ii) at least one ethylenically unsaturated monomer selected from the group consisting of C₃-C₁₀ α-monoolefins, C₁-C₁₂ alkyl esters of C₃-C₂₀ monocarboxylic acids, unsaturated C₃-C₂₀ mono- or dicarboxylic acids, anhydrides of unsaturated C₄-C₈ dicarboxylic acids, and vinyl esters of saturated C₂-C₁₈ carboxylic acids. Specifically, as the ethylene copolymer, there may be mentioned, for example, ethylene vinyl acetate (EVA), ethylene butyl acrylate (EBA), ethylene methyl acrylate (EMA), ethylene ethyl acrylate (EEA), ethylene methyl methacrylate (EMMA), ethylene butene copolymer (EB-Co) or ethylene octene copolymer (EO-Co). The olefin random copolymer may be a random polymer of ethylene or propylene and one or more copolymerizable α-olefin comonomers. For example, the olefin random copolymer may be a copolymer of ethylene or propylene and octene.

The ethylene copolymer or the olefin random copolymer may be included in an amount of 1 to 20 parts by weight, based on 100 parts by weight of the thermoplastic polyester elastomer. The presence of the ethylene copolymer or the olefin random copolymer in an amount exceeding 20 parts by weight may retard the solidification of products after powder slush molding.

The composition may further include an antioxidant or a colorant. As the antioxidant, there may be used, for example, Sonnoc, butylated hydroxy toluene (BHT), and Songnox 1076 (octadecyl 3,5-di-*tert*-butyl-4-hydroxyhydrocinnamate). Various pigments may also be used taking into consideration desired colors of the composition.

The antioxidant or the colorant may be included in an amount of 1 to 5 parts by weight, based on 100 parts by weight of the thermoplastic polyester elastomer. The presence of the antioxidant or the colorant exceeding 5 parts by weight may cause undesired phenomena, such as blooming, deteriorating the quality of the product.

The final composition may have an MI (190 °C, 2.16 kg) of 10 to 100 g/10 min, preferably 10 to 50 g/10 min, more preferably 10 to 35 g/10 min. If the MI (190 °C, 2.16 kg) of the composition is lower than 10 g/10 min, it may take a long time until the composition is melted by heating, resulting in low productivity. Meanwhile, if the MI (190 °C, 2.16 kg) of the composition exceeds 100 g/10 min, it may take a long time until the composition is solidified by cooling after molding and the strength of the material may deteriorate.

The powder slush molding composition can be rapidly melted. In a preferred embodiment, when the composition is injection molded into a 2 mm thick specimen, left standing on an aluminum plate (Aluminum Alloy 7010) in an oven at 230 °C for 10 minutes, cooled at room temperature for 1 hour, and separated from the aluminum plate, the specimen is measured to have a reduced thickness of 1.5 mm or less.

The powder slush molding composition can be rapidly solidified. In a preferred embodiment, when the composition is injection molded into a 2 mm thick specimen, left standing on an aluminum plate (Aluminum Alloy 7010) in an oven at 230 °C for 10 minutes, taken out of the oven, and peeled off from the aluminum plate during storage at room temperature, the specimen is separated from the aluminum plate without leaving residue on the aluminum plate within 2 minutes of storage.

The final composition has a Shore A hardness not higher 95, preferably a Shore A hardness of 70 to 90. If the hardness of the composition is excessively high, the surface touch of a final product is hard and felt bad. Meanwhile, if the hardness of the composition is excessively low, marks may be left or poor scratch resistance may be caused.

The powder slush molding composition is preferably micro-pelletized into a powder having a diameter of 1.0 mm or less, which is suitable for molding. The micro-pelletizing may be accomplished by extrusion or pulverization. However, pelletizing by pulverization (at extremely low temperature) may lead to the formation of many fluffs naps, impeding the flow of the composition during PSM, and may make it difficult for the material to reach all portions of the mold, leaving pinholes on the product surface. Therefore, it is more preferred to micro-pelletize the powder slush molding composition by extrusion rather than by pulverization.

The powder slush molding composition is particularly suitable for the production of an automotive interior material. The powder slush molding composition is required to have good scratch resistance for the production of an automotive interior material. Automotive interior materials are repeatedly wiped with suitable tools, such as wet dusters, during washing. Automotive interior materials should be protected from surface scratches, which are causes of scars or discoloration, despite washing for a long period of time. Further, the powder slush molding composition should be suitable for the manufacture of an invisible passenger airbag (PAB).

For this purpose, the glass transition temperature (Tg) of the thermoplastic polyester elastomer (TPEE) is preferably limited to -40 °C or less. The reason for this limitation is that the thermoplastic polyester elastomer enables inflation of the airbag to be inflated in the case of an accident without losing its flexibility even at -40 °C. If the Tg is higher than -40 °C, the PSM skin may be hardened at a temperature of -40 °C or less, and as a result, its high strength increases the risk that the airbag may not deploy. The thermoplastic polyester elastomer does not suffer from fogging, a phenomenon in which the internal materials are released at high temperature, and is non-toxic to humans and environmentally harmless. Due to these advantages, the TPEE is very suitable as a material for the production of an automotive interior material.

A further aspect of the present invention provides a powder slush molding method using the composition. Specifically, a skin of a crash pad as an automotive interior material can be produced by the following procedure.

First, the powder slush molding composition is micro-pelletized into a powder and is then fed into an open container. The powder may be small in diameter (*e*.*g*., ≥500 µm). Next, an electroforming mold electrodeposited with a suitable metal, such as nickel, is heated to a given temperature. Subsequently, the opening container is coupled to the electroforming mold using suitable coupling means to form a closed system, The powder is transferred to the electroforming mold by moving the closed system. For example, the powder may be transferred to the electroforming mold by the force of gravity while rotating the closed system. As a result, the powder is melted on the inner surface of the electroforming mold to form a uniform material layer. Next, the electroforming mold is released from the open container and is then cooled. Finally, the material layer is demolded from the electroforming mold to produce the desired skin.

The powder slush molding composition is melted and solidified rapidly and can be extruded into micropellets, thus being suitable for powder slush molding. A material produced using the powder slush molding composition is suitable for use as an automotive interior material, such as a crash pad, due to its excellent antifogging properties, scratch resistance, and resistance to sunlight discoloration.

The present invention will be explained in more detail with reference to the following examples. However, these examples are not intended to limit the scope and spirit of the present invention.

### (EXAMPLES)

As shown in Table 1, the components were blended together to prepare various compositions.

The melting points (Tₘ) of the polymers used were measured by DSC while increasing the temperature at a rate of 10 °C/min, in accordance with ASTMD-3418.
TPEE-1: Thermoplastic polyester elastomer, Hytrel 3078 (DuPont), melting point 167 °C, glass transition temperature -60 °C, MI (190 °C, 2.16 kg) 5.0 g/10 min, Shore A hardness 80
TPEE-2: Thermoplastic polyester elastomer, Hytrel 4056 (DuPont), melting point 152 °C, glass transition temperature -50 °C, MI (190 °C, 2.16 kg) 5.6 g/10 min, Shore A hardness 92
TPEE-3: Thermoplastic polyester elastomer, Hytrel 4556 (DuPont), melting point 193 °C, glass transition temperature -45 °C, MI (190 °C, 2.16 kg) 12 g/10 min, Shore A hardness 95
TPEE-4: Thermoplastic polyester elastomer, Hytrel 5526 (DuPont), melting point 203 °C, glass transition temperature -20 °C, MI (190 °C, 2.16 kg) 18 g/10 min, Shore A hardness 55
TPU-1: Thermoplastic polyurethane, Neothane 6175A (Dongsung Hichem), softening point 140 °C, glass transition temperature -50 °C, MI (190 °C, 2.16 kg) 60 g/10 min, Shore A hardness 75
MI enhancer 1: Toluene ethyl sulfonamide (Santicizer 8)
MI enhancer 2: Polyethylene wax (Lion Chemtec LC-102N)

### TEST METHODS

### 1. Melting rate

Each of the compositions was injection molded into a 2 mm thick specimen. The specimen is cut into a smaller duct-like specimen having dimensions of 50 mm × 2 mm × 2 mm. The specimen was placed on an aluminum plate (Aluminum Alloy 7010) at room temperature, introduced into an oven at 230 °C for 10 min, cooled at room temperature for 1 hour, and released from the aluminum plate. The thickness was measured. The melting rate of the composition was judged to be "low" when the thickness was ≥1.5 mm and "high" when the thickness was <1.5 mm.

### 2. Solidification rate

Seven specimens having dimensions of 50 mm × 2 mm × 2 mm were prepared in the same manner as in the preparation of the specimen for melting rate measurement. The specimens were placed on an aluminum plate at room temperature, introduced into an oven at 230 °C for 10 min, taken out of the oven, and peeled off from the aluminum plate after storage at room temperature for different periods of time of 1 min, 1 min 30 sec, 2 min, 2 min 30 sec, 3 min, 3 min 30 sec, and 4 min. For each specimen, the time at which no residue was left on the aluminum plate was measured. The solidification rate of the composition was judged to be "high" when the time was < 2 min and "low" when the time was ≥ 2 min.

### 3. Micro-pelletizing by extrusion

Each composition was tested to determine whether it could be pelletized with an underwater pelletizing machine having 0.4 mm diameter small holes under controlled die and cooling water temperatures.

### 4. Fogging test

A specimen having dimensions of 50 mm × 20 mm × 2 mm was prepared in the same manner as in the preparation of the specimen for melting rate measurement, and then a wood-free paper and a 500 g weight were sequentially placed thereon. After storage in an oven at 120 °C for 24 h, fogging was evaluated depending on whether the paper was stained with oil.

### 5. Scratch resistance

A #60 sandpaper was attached to the bottom of an iron weight having a bottom area of 25 mm × 50 mm and a weight of 1 kg. Thereafter, the sandpaper was allowed to reciprocate 20 times on the surface of the specimen for melting rate measurement. The scratch resistance of the specimen was evaluated by visual observation. The scratch resistance was judged to be "good" when few surface scratches were observed and "poor" when many surface scratches were observed.

### 6. Resistance to sunlight discoloration

Each composition was irradiated with a C type UV lamp for 8 h. Thereafter, the discoloration resistance of the composition was evaluated depending on the degree of discoloration.

The test results are shown in Table 1. In Table 1, the amounts of the raw materials are given in parts by weight.

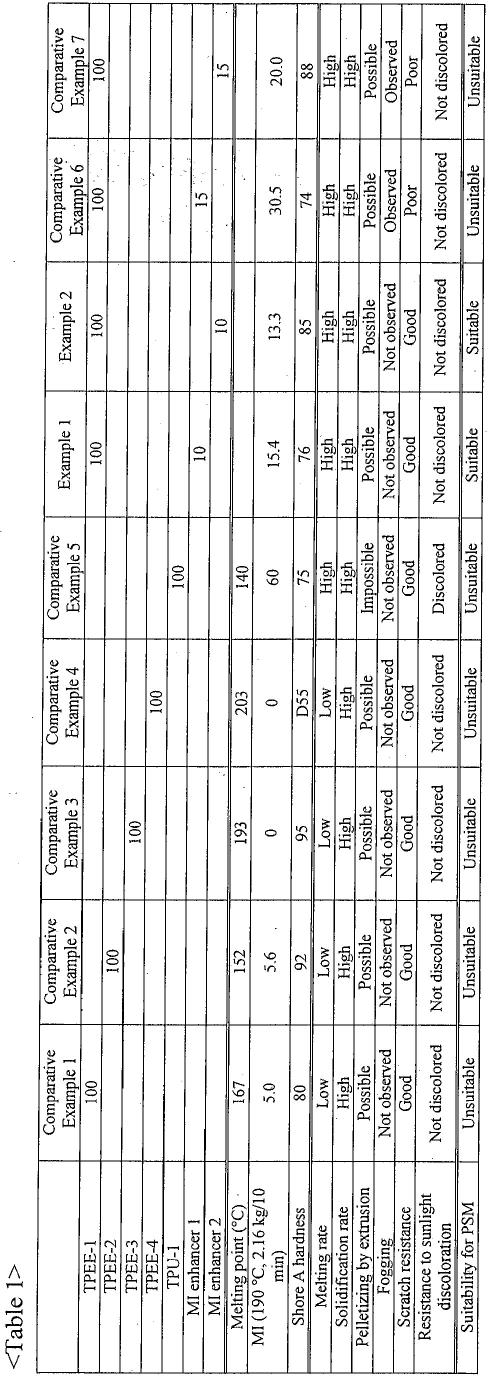

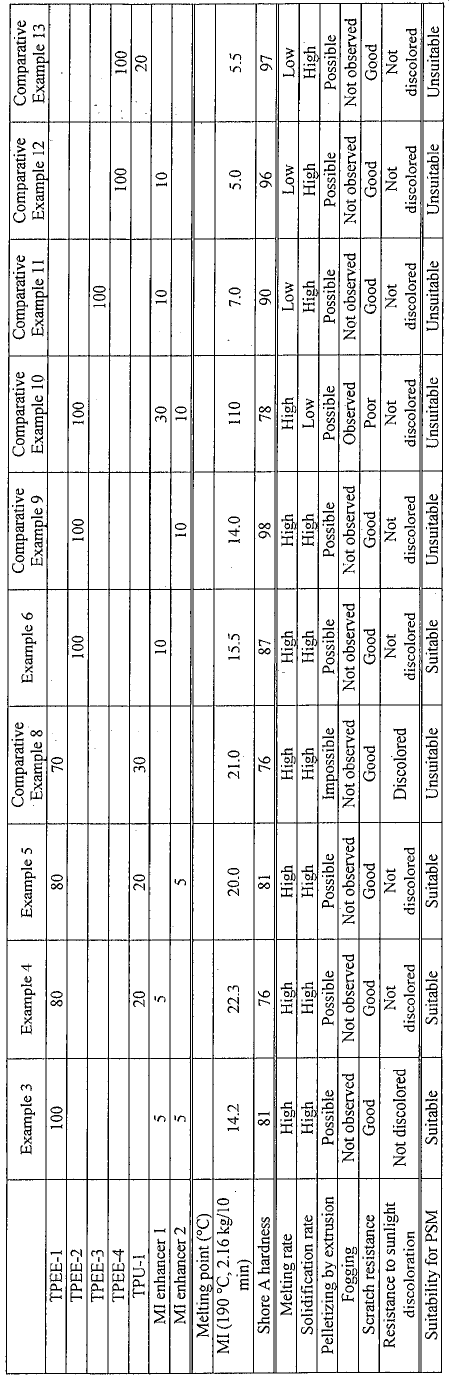

As can be seen from the results in Table 1, the compositions of Examples 1-6 were melted and solidified at higher rates and could be better micro-pelletized by extrusion than the compositions of Comparative Examples 1-13. In addition, the compositions of Examples 1-6 had excellent antifogging properties, scratch resistance, and resistance to sunlight discoloration. Due to these advantages, the compositions of Examples 1-6 are expected to be suitable for the production of automotive interior materials by powder slush molding.

Although the present invention has been described in detail with reference to the embodiments thereof, those skilled in the art will appreciate that various modifications can be made to the embodiments without departing from the spirit and scope of the present invention.

## Claims

1. A powder slush molding composition comprising a thermoplastic polyester elastomer (TPEE) having a peak melting point of 130 to 200 °C, as measured by differential scanning calorimetry (DSC), wherein the composition has a Shore A hardness not higher than 95 and a melt index (190 °C, 2.16 kg) of 10 to 100 g/10 min.

2. The powder slush molding composition according to claim 1, further comprising a melt index enhancer.

3. The powder slush molding composition according to claim 2, wherein the melt index enhancer is selected from the group consisting of waxes, thermoplastic polyurethane (TPU), toluene ethyl sulfonamide, and mixtures thereof.

4. The powder slush molding composition according to claim 2, wherein the melt index enhancer is present in an amount of 1 to 20 parts by weight, based on 100 parts by weight of the thermoplastic polyester elastomer.

5. The powder slush molding composition according to claim 1, wherein the thermoplastic polyester elastomer has poly(1,4-butylene terephthalate) and poly(tetramethylene ether)glycol blocks.

6. The powder slush molding composition according to claim 1, wherein the thermoplastic polyester elastomer has a glass transition temperature of -40 °C or less.

7. The powder slush molding composition according to claim 1, wherein the Shore A hardness is from 70 to 90.

8. The powder slush molding composition according to claim 1, wherein when the composition is injection molded into a 2 mm thick specimen, left standing on an aluminum plate (Aluminum Alloy 7010) in an oven at 230 °C for 10 minutes, cooled at room temperature for 1 hour, and separated from the aluminum plate, the specimen is measured to have a reduced thickness of 1.5 mm or less.

9. The powder slush molding composition according to claim 8, wherein when the composition is injection molded into a 2 mm thick specimen, left standing on an aluminum plate (Aluminum Alloy 7010) in an oven at 230 °C for 10 minutes, and stored at room temperature, the specimen is separated from the aluminum plate without leaving residue on the aluminum plate within 2 minutes of storage.

10. The powder slush molding composition according to claim 1, wherein the composition is micro-pelletized into a powder having a diameter of 1 mm or less.

11. An automobile interior material produced by processing the powder slush molding composition according to any one of claims 1 to 10.

12. A powder slush molding method comprising: feeding the powder slush molding composition in the form of a powder according to claim 10 into an open container; heating an electroforming mold; coupling the open container to the electroforming mold to form a closed system; transferring the powder to the electroforming mold by moving the closed system and melting the powder on the inner surface of the electroforming mold to form a material layer; releasing the electroforming mold from the open container; cooling the electroforming mold; and demolding the material layer from the electroforming mold.
